# DEMANDE DE BREVET EUROPEEN

(11) **EP 4 095 183 A1**
(43) Date de publication de la demande: **30.11.2022**
(21) Numéro de dépôt: 22175135.7
(22) Date de dépôt: 24.05.2022
(51) Int. Cl.: C08J 3/21, B29B 9/08, B29B 7/84, B29B 7/92, B29B 7/94, B29B 9/02, B29B 9/12, B29B 9/16, B29B 7/00

(54) **PROCÉDÉ D ÉLABORATION D'UN MATÉRIAU NATUREL COMPOSITE À FAIBLE EMPRUNTE CARBONE ET FORT TAUX DE MATIÈRE NATURELLE**

(30) Priorité: 25.05.2021 FR 2105427
(71) Demandeur: SINTERMAT, 21150 Venarey-les-Laumes (FR)
(72) Inventeur: DELEHOUZE, Arnaud, 21140 VIC DE CHASSENAY (FR); BAULOT, Eddy, 89160 ANCY LE FRANC (FR); NAIMI, Foad, 21150 VENAREY-LES-LAUMES (FR)
(74) Mandataire: IP Trust

(57) **Abrégé**

L'invention concerne un procédé de préparation d'un matériau naturel composite. Ledit procédé comporte les étapes suivantes :
- Dissolution dans au moins un solvant d'un matériau polymère solide afin de préparer une solution liquide
- Incorporation de la poudre de matériau naturel et mélange jusqu'à obtention d'un mélange homogène et intime
- Évaporation des solvants jusqu'à l'obtention d'un bloc solide
- Broyage dudit bloc solide pour en faire des granulés
- Pressage des granules pour en faire un objet massif et dense.

## Description

### Domaine de l'invention

La présente invention concerne le domaine des matériaux et de pièces décoratives composites ayant une apparence de matériau naturel, notamment de cuir, d'un point de vue visuel et tactile et même olfactif. Les matériaux naturels ont un attrait croissant depuis quelques années et notamment dans des domaines de la lunetterie, du mobilier, de l'habillage de surface de l'habitacle d'un véhicule automobile, ou encore du luxe. Toutefois, aujourd'hui les matériaux naturels ne sont pas utilisés pur à 100% en massique pour deux raisons principales :
- La première est que le matériau 100% naturel est difficile à produire par des procédés conventionnels. En effet, le thermo-mélangeage et l'injection de ces matières naturelles est complexe, voire impossible, à cause notamment de la rhéologie et des températures nécessaires qui risquent de dégrader les matériaux naturels, les rendant impropres.
- La seconde raison concerne les propriétés finales de ces matériaux qui ne sont pas aux attentes des besoins clients notamment en termes de souplesse.

Une alternative actuelle à ces deux problématiques existe et consiste à diluer fortement le matériau naturel dans une matrice polymérique. Toutefois, le taux massique de matière naturelle est alors inférieur à 30%. Le composite final ne comporte donc qu'une fraction minoritaire de matériaux naturels.

### Etat de la technique

On connaît dans l'état de la technique le brevet WO2006026500 concerne de nouvelles compositions pharmaceutiques comportant une dispersion de solides du composé de formule (I), à des procédés pour la préparation de ces nouvelles compositions pharmaceutiques et à leur utilisation pour le traitement de troubles hyperprolifératifs, tels que le cancer, soit comme seul agent ou en combinaison avec d'autres thérapies.

La demande de brevet US2005148703 concerne des composites polymères contenant de la kératine et au moins un polymère. L'invention concerne également des procédés de production desdits composites polymères. Les propriétés des polymères sont améliorées par la dispersion, dans le matériau polymère, de matériau nettoyé et traité à base de kératine, de préférence dérivé de plumes de volaille. Le matériau à base de kératine peut se présenter sous la forme de fibres, de particules ou de grands bouts de poils, d'ongles, de sabots, de cornes d'animaux ou de plumes d'oiseaux (par exemple, des volailles).

Le brevet EP1967160 concerne un procédé de préparation d'un matériau composite de composition homogène, comprenant au moins une phase céramique bioactive et au moins un polymère biorésorbable, caractérisé en ce qu'il comprend les étapes suivantes :
a°) on dispose d'une phase céramique bioactive sous forme de poudre,
b°) on met ladite poudre de céramique bioactive en suspension dans un solvant,
c°) on ajoute à la suspension obtenue en b°) un polymère biorésorbable, et on mélange jusqu'à obtention d'une dispersion visqueuse homogène de ladite poudre de céramique bioactive dans une solution composée dudit solvant et dudit polymère,
d°) on réalise une précipitation de la dispersion obtenue en c°) dans une solution aqueuse pour obtenir un matériau composite homogène

### Inconvénients de l'art antérieur

Les solutions de l'art antérieur ne permettent pas d'obtenir un matériau homogène alliant les qualités mécaniques à une apparence et un toucher d'un matériau naturel et même fidèle à son odeur.

### Solution apportée par l'invention

L'invention concerne selon son acception la plus générale un procédé de préparation d'un matériau naturel composite caractérisé en ce qu'il comporte les étapes suivantes :
- Dissolution dans au moins un solvant d'un matériau polymère solide afin de préparer une solution liquide
- Incorporation de la poudre de matériau naturel et mélange jusqu'à obtention d'un mélange homogène et intime
- Evaporation des solvants jusqu'à l'obtention d'un bloc solide
- Broyage dudit bloc solide pour en faire des granulés
- Pressage, notamment uni-axial, multi-axial ou isostatique, à chaud ou à froid, des granules pour en faire un objet massif et dense.

Selon des variantes :
- ledit au moins un solvant est un solvant miscible dans l'eau
- ledit au moins un solvant est de l'acétone
- ledit polymère est soluble dans les cétones ou les alcools
- ledit matériau naturel est broyé afin d'obtenir une granulométrie inférieure à 5 000µm.
- le taux de charge matériau naturel est supérieur à 35% massique.
- le taux de charge matériau naturel est supérieur à 55% massique.
- l'enrobage de la poudre de matériau naturel est réalisée par fluidisation en phase liquide.
- l'enrobage de la poudre de matériau naturel est réalisée par fluidisation en phase gazeuse par évaporation du polymère seul ou en solution.

Avantageusement, le procédé comporte une étape de recyclage du solvant évaporé.

Selon une variante, le procédé comporte une étape d'incorporation du résidu solide du mélange sous forme broyée ou granulée avant mise en forme.

Selon une première variante, ladite étape de mise en forme est réalisée par pressage à chaud.

Selon une deuxième variante, ladite étape de mise en forme est réalisée par compaction isostatique à froid.

### Description détaillée d'un exemple non limitatif de l'invention

La présente invention sera mieux comprise à la lecture de la description qui suit, se référant à un exemple non limitatif de réalisation.

### Principe général

La solution proposée repose sur la solubilisation d'un polymère naturel et/ou recyclable afin d'utiliser cette solution liquide pour enrober de manière homogène et intime chaque grain de matériau naturel avec le polymère. Cette approche permet de réduire considérablement le taux massique en polymère. Après évaporation des solvants, il est récupéré un bloc homogène de matériau naturel lié par un polymère avec un taux massique dépassant les 40% en masse en matière naturelle et pouvant atteindre les 90% massique. Ce bloc est ensuite granulé pour être utilisé en pressage à chaud ou à froid suivant la nature du polymère employé.

### Description d'un exemple de mise en œuvre de l'invention

On décrit par matériaux naturels, tous matériaux provenant du monde végétal, animal ou minéral et n'ayant subi que très peu de transformation émettrice de gaz à effet de serre. Ces matériaux correspondent aux résidus d'extraction, aux chutes de transformation, ou encore aux rebuts de production. Ils peuvent enfin provenir du recyclage de ces mêmes matériaux naturels, mais ayant été utilisés puis déclassés.

On entend par matériaux biosourcés, tous matériaux d'origine biologique et ne faisant pas ou très peu intervenir d'intermédiaires issus de produits fossiles comme le pétrole.

On entend par environnement, toutes actions extérieures sollicitant un matériau. Parmi ces actions, l'on retrouve les sollicitations mécaniques, la température, l'humidité ou tout fluide pouvant être en contact avec le matériau.

On entend par composite, l'association d'au moins deux composants pour n'en former qu'un seul. Le plus souvent le composite présente des propriétés intermédiaires aux propriétés des composants pris séparément. Dans le cadre de cette déclaration, le matériau naturel correspond à l'un des composants de ce composite. Toutefois, afin de donner au matériau naturel des propriétés physico-chimiques intéressantes pour une utilisation, il est nécessaire de lui donner de la souplesse, de la ductilité ou encore une certaine tolérance aux environnements. Ainsi, l'au moins un second composant est choisi parmi les matériaux polymères biosourcés de manière à conférer au composite des propriétés intéressantes.

Dans un mode de réalisation, le matériau naturel est un composant végétal tel que le chanvre, la drêche de bière, ou toutes essences de bois.

Dans autre mode de réalisation encore, le matériau naturel est un composé animal, parmi lesquels figurent les cuirs d'animaux, les cornes ou encore les os. Dans un autre mode de réalisation enfin, le matériau naturel est un composé minéral tel que les coquilles et coquillages ou les pierres naturelles.

Dans un mode de réalisation préféré, les matériaux naturels correspondent aux résidus d'extraction, aux chutes de transformation, ou encore aux rebuts de production de leur filière associée. Dans un mode de réalisation secondaire, ils peuvent provenir du recyclage de ces mêmes matériaux naturels, mais ayant été utilisés puis déclassés. Dans un mode de réalisation, le matériau naturel est utilisé directement après sa récupération sans transformation particulière.

Dans un mode de réalisation préférée, ces matériaux naturels sont transformés par broyage ou fractionnement, afin d'homogénéiser la granulométrie tout en la réduisant dans une gamme propice à leur mise en forme. Préférentiellement, la granulométrie obtenue est inférieure à 50 000 µm. Préférentiellement, la granulométrie obtenue est inférieure à 5000µm. Préférentiellement enfin, la granulométrie est inférieure à 500µm.

Dans un mode de réalisation, le polymère est un polymère soluble dans l'eau, c'est notamment le cas du PVA ou encore du PEG ou tout autre polymère connu de l'homme du métier. Dans un autre mode de réalisation, le polymère est un polymère soluble dans un autre solvant miscible dans l'eau comme les alcools ou les cétones, c'est notamment le cas de l'acétate de cellulose ou encore le PMMA. Le choix du polymère est fait de manière à réduire l'emprunte carbone du procédé et sa compatibilité physico-chimique avec la matière naturelle, notamment à favoriser la tenue mécanique locale des interfaces entre le polymères/matières naturelles. Ainsi, il sera privilégié l'utilisation des polymères biosourcés ou recyclés ayant pour solvant des produits issus d'une filière durable. Par ailleurs, le choix du couple polymère/solvant est fait en lien avec la stabilité chimique avec la matière naturelle. On laissera à l'homme du métier le choix du couple Polymère/solvant en fonction de la matière naturelle choisie. Mais à titre d'exemple, on peut citer le cas du cuir/Acétate/acétone (pur ou diluée dans l'eau).

A titre d'exemple non limitatif, dans un mode de réalisation préféré, l'enrobage des grains de matière naturelle se fait par mélangeage en solution liquide, la matière naturelle est incorporée à la solution puis mélangée de manière mécanique. Dans un autre mode de réalisation, cet enrobage se fait par fluidisation liquide, la matière naturelle est incorporée à la solution liquide puis mélangée par incorporation d'un gaz de fluidisation. Dans un autre mode de réalisation encore, cet enrobage se fait par fluidisation gazeuse, le polymère ou la solution est évaporée et transportée à l'aide d'un gaz porteur dit de fluidisation dans lequel seront incorporés les grains de matière naturelle. Dans ce dernier cas, il est récupéré non pas un bloc solide de matière naturelle liée par le polymère, mais des agglomérats de matière naturelle liée par le polymère. En variante préférée, dans le cas de l'utilisation d'une solution liquide de polymère, l'évaporation du solvant se fait avec une re-condensation afin de le récupérer et de pouvoir le réutiliser un certain nombre de fois. En variante préférée encore, le polymère est transformé par broyage ou granulation avant l'étape de solubilisation liquide ou évaporation afin d'accroitre la surface d'échange et d'accélérer le processus de solubilisation ou d'évaporation. Ainsi, le polymère présentera une granulométrie inférieure à 5 000µm. Préférentiellement, la granulométrie obtenue est inférieure à 5 00µm. Préférentiellement enfin, la granulométrie est inférieure à 50µm.

Dans un mode de réalisation, le taux massique de matériau naturel est supérieur à 35%, préférentiellement encore supérieur à 55%mass, préférentiellement enfin supérieur à70%mass. Le complément étant représenté par la part de polymère.

Dans un mode de réalisation, il est possible d'avoir recours à un agent mouillant de manière à favoriser la mouillabilité de la solution de polymère liquide avec la matière naturelle. Ce mode permet d'accroitre l'homogénéité finale du mélange intime et donc de pouvoir réduire encore le taux massique du polymère.

Dans un autre mode de réalisation, il peut être ajouté au polymère un additif comme un agent plastifiant, afin d'accroitre sensiblement les propriétés de souplesse et de résilience du composite final.

## Revendications

1. Procédé de préparation d'un matériau naturel composite **caractérisé en ce qu'**il comporte les étapes suivantes :
- Dissolution dans au moins un solvant d'un matériau polymère solide afin de préparer une solution liquide
- Incorporation de la poudre de matériau naturel et mélange jusqu'à obtention d'un mélange homogène et intime
- Evaporation des solvants jusqu'à l'obtention d'un bloc solide
- Broyage dudit bloc solide pour en faire des granulés
- Pressage des granules pour en faire un objet massif et dense.

2. Procédé de préparation d'un matériau naturel composite selon la revendication 1 **caractérisé en ce que** ledit au moins un solvant est un solvant miscible dans l'eau.

3. Procédé de préparation d'un matériau naturel composite selon la revendication 1 **caractérisé en ce que** ledit au moins un solvant est de l'acétone.

4. Procédé de préparation d'un matériau naturel composite selon la revendication 1 **caractérisé en ce que** ledit polymère est soluble dans les cétones ou les alcools.

5. Procédé de préparation d'un matériau naturel composite selon la revendication 1 **caractérisé en ce que** ledit matériau naturel est broyé afin d'obtenir une granulométrie inférieure à 5 000µm.

6. Procédé de préparation d'un matériau naturel composite selon la revendication 1 **caractérisé en ce que** le taux de charge matériau naturel est supérieur à 35% massique.

7. Procédé de préparation d'un matériau naturel composite selon la revendication 1 **caractérisé en ce que** le taux de charge matériau naturel est supérieur à 55% massique.

8. Procédé de préparation d'un matériau naturel composite selon la revendication 1 **caractérisé en ce que** l'enrobage de la poudre de matériau naturel est réalisée par fluidisation en phase liquide.

9. Procédé de préparation d'un matériau naturel composite selon la revendication 1 **caractérisé en ce que** l'enrobage de la poudre de matériau naturel est réalisée par fluidisation en phase gazeuse par évaporation du polymère seul ou en solution.

10. Procédé de préparation d'un matériau naturel composite selon l'une
quelconque des revendications 1 à 8 **caractérisé en ce qu'**il comporte une étape de recyclage du solvant évaporé.

11. Procédé de préparation d'un matériau naturel composite selon l'une
quelconque des revendications précédentes **caractérisé en ce qu'**il comporte une étape d'incorporation du résidu solide du mélange sous forme broyée ou granulée avant mise en forme.

12. Procédé de préparation d'un matériau naturel composite selon l'une
quelconque des revendications précédentes **caractérisé en ce que** ladite étape de mise en forme est réalisée par pressage à chaud.

13. Procédé de préparation d'un matériau naturel composite selon l'une
quelconque des revendications 1 à 11 **caractérisé en ce que** ladite étape de mise en forme est réalisée par compaction isostatique à froid.
